(19)

Europäisches Patentamt

European Patent Office

Office européen des brevets

(11) **EP 2 063 068 A1**

(12) **EUROPEAN PATENT APPLICATION**

(43) Date of publication:
**27.05.2009 Bulletin 2009/22**

(51) Int Cl.:
***E21B 47/00*** *(2006.01)*

(21) Application number: **08158216.5**

(22) Date of filing: **13.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **26.11.2007 US 990129 P**

(71) Applicant: **Schlumberger Holdings Limited (GB)**, **Tortola (VG)**

(72) Inventor: **Vannuffelen, Stephane**
**Southampton, Hampshire SO31 4RA (GB)**

(74) Representative: **Molony, Anna**
**Chapman Molony**
**Thorpe House**
**17 Dormer Place**
**Leamington Spa CV32 5AA (GB)**

(54) **Pipe and method of determining the shape of a pipe**

(57)     A pipe 10 having an optical fibre strain sensor 12 embedded within it. The optical fibre strain sensor comprising an optical fibre having an array of fibre Bragg gratings (FBG) provided within it. The FBGs are arranged in a spaced array along the fibre 12. The optical fibre strain sensor is helically wound, with a fixed helix pitch, around the axial length of the pipe 10. The FBGs are thereby arranged in a predetermined orientation relative to the axis of the pipe 10. A method of determining the shape of a pipe, including decoupling the effects of bending, tension, torsion and hoop strain on the strain measurements made by the FBGs and/or interpolating the strain measurements to obtain a fully distributed strain profile of the pipe 10.

Fig. 1

**Description**

The invention relates to a pipe, particularly but not exclusively a subsea pipe, and a method of determining the shape of the pipe.

Subsea production risers typically comprise several kilometer long pipes linking seabed equipment with surface production facilities. As the subsea installation is located deeper and deeper, there is a growing need for monitoring the dynamic behavior of the pipes connected to it. From an engineering standpoint, monitoring strain of the pipes is a way to assess their operating conditions. In their typical operating conditions, risers are subject to very complex loads, including self weight, internal pressure from the production fluid, tension from the surface facility, tension from buoyancy modules attached to the structure, and Vortex Induced Vibrations. These loads generate mechanical stresses on the riser pipes. Risers are designed according to a certain set of load scenarios, in order to operate reliably in real conditions.

One critical aspect of riser engineering is its dynamic behaviour during operation, during which it is subjected to loads changing with time. The typical resonance frequency range for a vertical rigid riser is in the range of $10^{-3}$ - 10 Hz. Typically 100 frequency modes are of interest for a subsea riser pipe. Various systems have been developed or proposed for the monitoring of risers' mechanical behaviour in the field. One is based on the monitoring of riser movement using an accelerometer platform. Another approach is the direct measurement of the strain within the riser. One proposed approach is to use optical fibres as strain gauges.
There are several way of measuring strain in optical fibres. Strain measurement can be either localized, semi-distributed or distributed depending on the technology used for the interrogation of the fibre. Distributed strain measurement along an optical fibre can be done through Brillouin scattering. Brillouin measurements can also provide distributed temperature measurements. Brillouin based measurements can be made along few 10s of km of optical fibre. However, Brillouin measurement also has limitations. Its spatial resolution is in the range of a few metres and measurement time can be in the range of a few minutes. Therefore it is not very suitable for measurement of dynamic strain above a few 10s of milliHertz. This is a significant limitation, considering the typical resonance frequency range of a riser pipe.

For localized/semi-distributed strain measurement, the use of fibre Bragg gratings (FBGs) is well established. Fibre Bragg gratings can be used as direct strain gauges and a large number of gratings can be multiplexed on a single optical fibre. Several systems for interrogating FBGs have been proposed, and will be well know to the person skilled in the art. Based on current technology, it is possible to interrogate up to a few 100 FBG sensors on a single optical fibre. Typical measurement time is around 1 s.

According to a first aspect of the invention there is provided a pipe having an optical fibre strain sensor coupled to it, the optical fibre strain sensor comprising an optical fibre having a plurality of optical fibre gratings provided therein, the gratings being arranged in a spaced array along the fibre, and the optical fibre strain sensor being helically wound around the axial length of the pipe, such that the gratings are provided in a predetermined orientation relative to the axial direction of the pipe

During deployment and use of the pipe, the optical fibre strain sensor can be exposed to axial deformation along the axial direction of the pipe and/or bending and/or hoop strain due to the internal pressure of the fluid within the pipe and/or shear strain (including torsion). The different contribution of each parameter at the location of each grating depends upon the orientation of the grating relative to the axial direction of the pipe.

The optical fibre gratings preferably comprise fibre Bragg gratings. The gratings are preferably arranged with a spacing between adjacent gratings such that strain measurements made at each of the gratings may be interpolated to reconstitute the strain profile along the optical fibre and thus along the pipe. The gratings are preferably arranged with a spacing $\Delta d$ between adjacent gratings, where:

$$\Delta d_{Grating} \leq \pi \sqrt{r_0^2 + \frac{H^2}{4\pi^2}} \,.$$

The invention thereby provides a pipe having an optical fibre strain sensor adapted for semi-distributed strain sensing at a spatial sampling frequency which allows a fully distributed strain profile to be reconstituted from the strain measurements provided by the array of gratings. A strain profile which provides a very good approximation to the real, fully distributed strain profile of the pipe can thereby be obtained.

The optical fibre strain sensor is preferably helically wound with a fixed pitch. The optical fibre strain sensor thereby intersects the pipe axis with a fixed angle. Preferably, the helix pitch is selected according to the parameter to which the optical fibre strain sensor is to be most sensitive too. The helix pitch may be selected such that the optical fibre strain sensor is most sensitive to torsion strain, tension strain or hoop strain.

The pipe may comprise a flexible pipe, a rigid pipe or a flowline. The pipe is most preferably a subsea pipe.

The optical fibre strain sensor may be coupled to the pipe by being provided on the surface of the pipe or being embedded within the pipe.

According to a second aspect of the invention there is provided a method of determining the shape of a pipe, the method comprising:

coupling an optical fibre strain sensor to the pipe, the optical fibre strain sensor comprising an optical fibre having a plurality of optical fibre gratings provided therein, the gratings being arranged in a spaced array along the fibre, and the optical fibre strain sensor being helically wound around the axial length of the pipe, such that the gratings are provided in a predetermined orientation relative to the axial direction of the pipe;

optically interrogating the optical fibre gratings to determine their central wavelength and comparing the measured central wavelength of each grating to its known central wavelength for an undeformed pipe, to determine any wavelength shift in the central wavelength of each grating;

converting the wavelength shifts into the applied strain experienced by each optical fibre grating;

from the strain measurements for a plurality of gratings provided within a section of pipe, decoupling the strain contributions due to axial strain, hoop strain and shear strain within the section of pipe, and repeating for a plurality of sections of pipe; and

from the decoupled strain contributions for each section of pipe determining the shape of the pipe.

The method preferably further comprises determining the shape of the pipe by calculating the strain distribution along the pipe using the equation

$$S(s) = \Delta S(s)\sin(K_0 s + \varphi(s)) + S_0(s)$$

where: $\sin(K_0 s + \varphi(s))$ is the modulation of generated by pipe bending; $\Delta S(s)$ is the amplitude of the modulation

$$\frac{1}{R(s)} = \frac{1}{\cos\gamma_0} \frac{\Delta S(s)}{2r_0}$$ , $S_0(s)$ is an offset generated by the torsion, tension and Hoop strain, $\varphi(s)$ is the angle of the bending plane compared to the x, z plane, s is the curvilinear coordinate along the optical fibre. S(s) varies sinusoidally, and plotting S(s) produces a sinusoidal curve with a modulated amplitude and phase.

The method may further comprise determining the direction of the main plane of bending of the pipe by comparing the phase of the sinusoidal curve with the phase of a previously recorded sinusoidal curve, a phase shift indicating a change in the main plane of bending, and the phase shift being equal to the angle of rotation of the main plane of bending of the pipe.

The method may alternatively comprise calculating the Fourier transform of S(s). The Fourier transform will contain spatial frequency components centred around $K_0/2\pi$ , corresponding to the effect of the main modulation $\sin(K_0 s + \varphi(s))$, $K_0/2\pi$ , corresponding to the effect of the bending contribution $\Delta S(s)$, and 0, corresponding to the effect of the torsion, tension and hoop strain $S_0(s)$.

The method may further comprise applying a low-pass frequency filter to the Fourier transform to isolate the effect of the torsion, tension and hoop strain $S_0(s)$. The method may further comprise applying synchronous demodulation to S(s) to isolate $\Delta S(s)$ and $\varphi(s)$, using, for example, $\sin(K_0 s)$ and $\cos(K_0 s)$ as base functions.

The method may alternatively or additionally comprise interpolating the strain measurements made at each of the gratings to thereby reconstitute the strain profile along the optical fibre strain sensor and thus along the pipe. The method preferably comprises interpolating the strain measurements using the Whittaker-Shanon interpolation formula.

The method may further comprise determining the neutral axis shape of the pipe from the distributed bending profile of the pipe.

The optical fibre strain sensor may be coupled to the pipe by being provided on the surface of the pipe or being embedded within the pipe.

Embodiments of the invention will now be described in detail, by way of example only, with reference to the accompanying drawings, in which:

Figure 1 shows the relationship of the z, z', x, x' and δ co-ordinates to the x and z cylindrical co-ordinates;

Figure 2 shows a) a diagrammatic representation of an un-bent pipe according to a first embodiment of the invention together with the variation of strain as a function of axial position (z), and b) the pipe of a) bent together with the resulting variation of strain as a function of axial position (z);

Figure 3 the pipe of Figure 1b) together with details of the different strain components;

Figure 4 shows the radial variation of strain across the diameter of the pipe and a diagrammatic representation of the pipe showing the helix pitch (H);

Figure 5 shows the sinusoidal strain variation as a function of curvilinear coordinate s when constant bending is applied to the pipe;

Figure 6 illustrates the phase shift experienced by the sinusoidal strain variation due to a rotation of the main plane of bending of the pipe;

Figure 7 illustrates the effect of a) tension and compression of the strain variation as a function of axial position along the pipe, b) the effect of torsion about the z-axis on the strain variation, and c) the effect of internal pressure (hoop strain) on the strain variation;

Figure 8 illustrates the variation of strain as a function of axial position in the case of complex bending of the pipe;

Figure 9 illustrates the variation of strain as a function of axial position in the case of alternative complex bending of the pipe;

Figure 10 illustrates the Fourier transform as a function of spatial frequency (k) of the strain variation along the pipe; and

Figure 11 illustrates how to reconstitute the shape of the neutral axis of the pipe.

Referring to the drawings, a first embodiment of the invention provides a pipe 10 having an optical fibre strain sensor 12 embedded within it. In this example the pipe 10 comprises a subsea flexible pipe. The optical fibre strain sensor comprises an optical fibre having an array of fibre Bragg gratings (FBG) provided within it. The FBGs are arranged in a spaced array along the fibre 12. The optical fibre strain sensor is helically wound, with a fixed helix pitch, around the axial length of the pipe 10.

A subsea flexible pipe 10, such as a production riser, will deform in use under the load applied to it. The deformation typically includes:

- Axial deformation along the principle/longitudinal axis of the pipe.
- Bending.
- Hoop deformation due to the internal pressure of production fluid flowing through the pipe.
- Torsion.

The optical fibre strain sensor 12 embedded in the pipe 10 will react to the combination of these different strains. The different contribution of each type of strain will depend on the fibre orientation (and thus the FBG orientation) relative to the strain principal axis, which is the axis of the pipe 10. It will be appreciated that the optical fibre strain sensor 12 may alternatively be coupled to the surface of the pipe 10.

In a cylindrical coordinate system, the strain contributions will be:

- $\varepsilon_z$ (strain in the axial [z] direction along the length of the pipe) which includes the effect of tension strain and bending strain.
- $\varepsilon_x$ (strain in the radial [$\theta$] direction) which includes the effect of Hoop strain.
- $\varepsilon_x z$ (shear strain) which includes the effect of torsion.

By knowing $\varepsilon_z, \varepsilon_x, \varepsilon_x z$ , the resulting strain in any direction $\delta$ at point M can be calculated using the following relations:

$$\varepsilon_{z'} = \frac{\varepsilon_z + \varepsilon_\chi}{2} + \frac{\varepsilon_z - \varepsilon_\chi}{2} \cos( 2\delta) + \varepsilon_{z\chi} \sin( 2\delta)$$

$$\varepsilon_{\chi'} = \frac{\varepsilon_Z + \varepsilon_\chi}{2} - \frac{\varepsilon_Z - \varepsilon_\chi}{2}\cos(2\delta) - \varepsilon_{Z\delta}\sin(2\delta)$$

$$\varepsilon_{z'\chi'} = -\frac{\varepsilon_Z - \varepsilon_\chi}{2}\sin(2\delta) + \varepsilon_{Z\delta}\cos(2\delta)$$

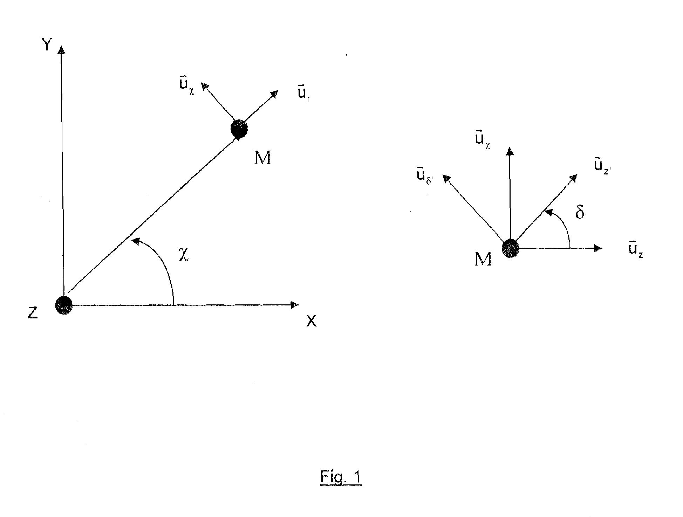

The relationship of the z', χ, χ' and δ co-ordinates to the x and z cylindrical co-ordinates is shown in Figure 1.

Winding the optical fibre strain sensor 12 helically around the pipe 10 with a fixed pitch results in the fibre 12 intersecting the pipe axis with a fixed angle.

According to a second embodiment of the invention there is provided a method of determining the shape of the pipe 10, from the strain measurements made using the FBGs. The array of FBGs within the optical fibre strain sensor 12 provide semi-distributed strain measurements, which can be used in order to obtain a fully distributed strain distribution along the fibre 12, and thus along the pipe 10, as follows.

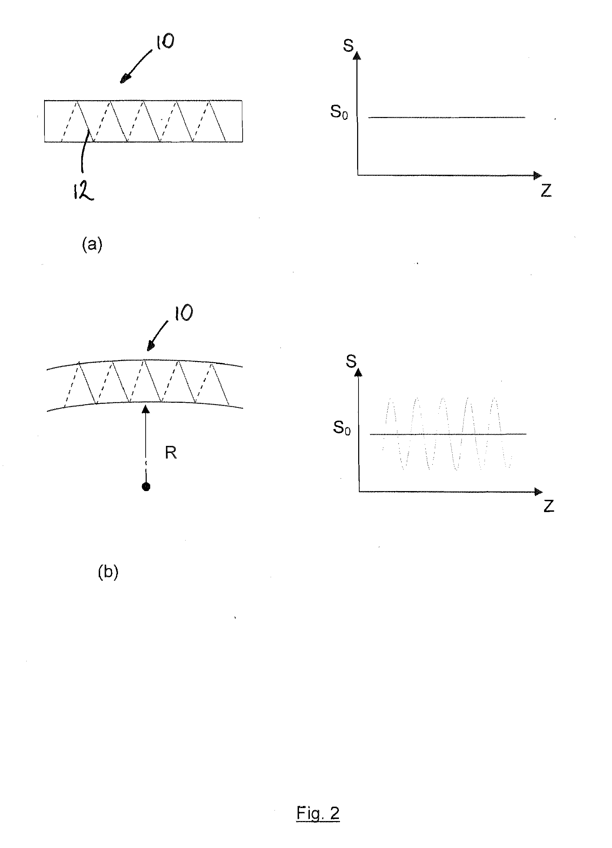

Figures 2 to 5 explain the effect of bending the pipe 10 in the [X;Z] plane, and explain the separate effects of bending, torsion, tension and Hoop strain on the strain in the fibre 12 on a simple pipe.

Figure 2(a) shows a pipe 10 with an optical fibre strain sensor 12 wound around it with a helix angle $\gamma_0$. s is the curvilinear coordinate associated with the fibre 12. Strain as a function of s, when no strain is applied on the pipe 10, is shown alongside the pipe 10. In this case the strain is constant.

Figure 2(b) shows the pipe 10 under uniform bending in one direction in the X, Z plane, at a radius of curvature R, with the resulting strain variation shown alongside. It can be seen that the strain measured along the fibre 12 follows a sinusoidal shape.

The sinusoidal shape of the strain variation S(s) is caused as follows.

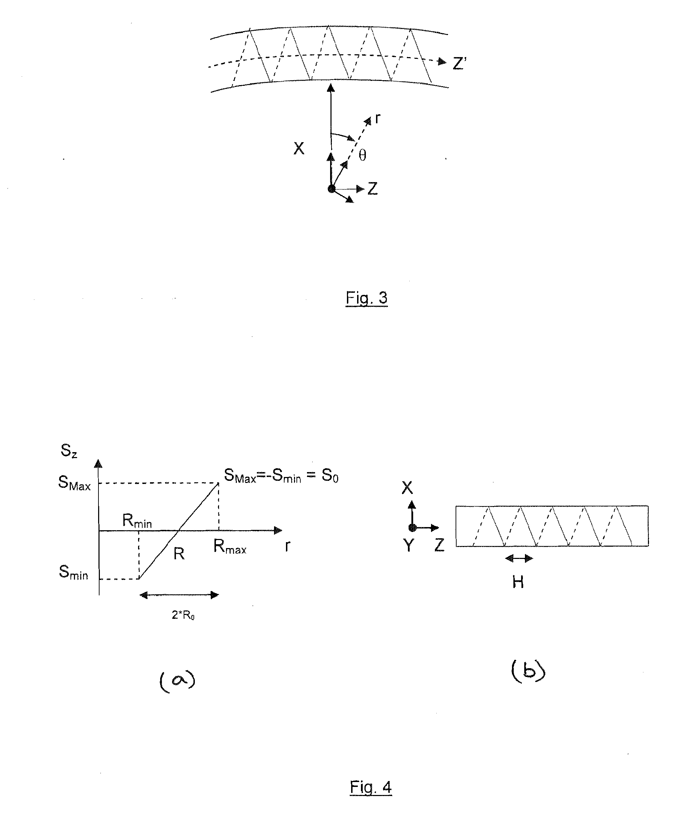

Referring to Figures 3 and 4(a), the axial strain distribution across the diameter of the pipe is linear, and is given by:

$$S(r) = a * r + b \qquad\qquad \text{(Equation A)}$$

The strain amplitude is given by:

$$\frac{1}{R} = \frac{1}{\cos\gamma_0}\frac{2S_0}{2r_0}$$

Referring to Figure 4(b), for a point M on the helically wound fibre 12:

$$M = \begin{vmatrix} x \\ y \\ z \end{vmatrix} = \begin{vmatrix} r_0\cos gz \\ r_0\sin gz \\ z \end{vmatrix}$$

where g = 2π/H, and H is the helix pitch. The helix curve makes a constant angle $\gamma_0$ the axis of the pipe 10.

The curvilinear coordinate s along the helically wound optical fibre sensor 12 is given by:

$$s = G.z \qquad\qquad \text{(Equation B)}$$

where

$$G = \frac{2\pi}{H} \sqrt{r_0^2 + \frac{H^2}{4\pi^2}}$$

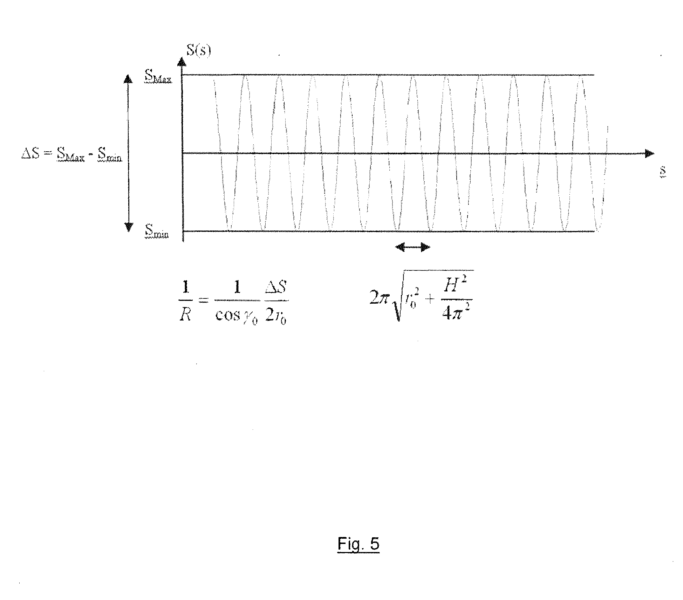

Referring to Figure 5, for a point M on the helically wound optical fibre sensor 12, in the X, Z plane, its distance r from the helix axis (co-axial with the pipe axis in this example), is given by:

$$r = x(z) = r_0 \cos gz \qquad \text{(Equation C)}$$

The variation of strain, S(s), along the helically wound optical fibre sensor 12, using curvilinear coordinate s, is given by combining Equations A, B and C:

$$S(s) = a * r + b = a * r_0 * \cos\frac{g}{G}s + b$$

where

$$K_0 = \frac{g}{G} = \left( r_0^2 + \frac{H^2}{4\pi^2} \right)^{-0.5} \qquad \text{(Equation D)}$$

When the pipe 10 is uniformly bent, the strain applied to the optical fibre sensor 12 will be periodic and follow a sinusoidal relationship, as illustrated in Figure 5. The pipe curvature (1/R) can be estimated from the amplitude of the sinusoidal curve $S_{Max}$-$S_{min}$ of the strain variation, as follows:

$$1/R = (S_{Max} - S_{min}) / 2r_0 / \cos\gamma_0$$

From an engineering standpoint, pipe curvature estimation is very important. Pipe over-bending can lead to damage of the pipe structure.

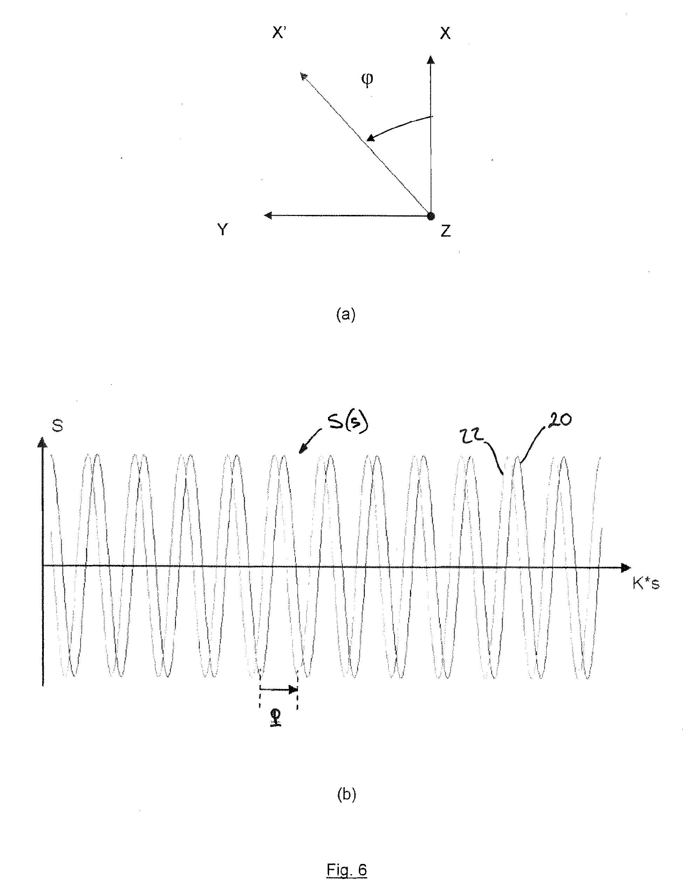

Figure 6 illustrates the effect on the strain variation, S(s), of a change in the direction of the plane of curvature. It leads to a phase shift $\varphi(s)$ in S(s), from an initial position shown by curve 20 to a second position, corresponding to a different plane of curvature, shown by curve 22. This phase shift is equal to the angle of rotation of the main plane of curvature compared to the initial position.

Therefore monitoring phase shift compared to an initial position will give an estimation of the way bending orientation is changing with time.

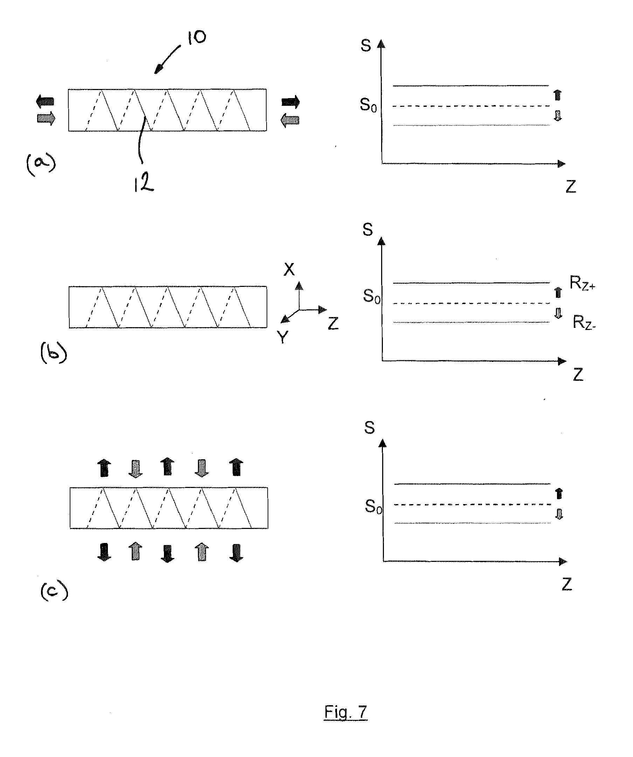

Figure 7 illustrates the effect of tension, torsion and Hoop strain on the pipe 10 and fibre 12, and shows a) the variation in strain caused as a function of applied tension, b) torsion ($R_{z+}$, $R_{z-}$), and c) hoop strain. As can be seen, application of tensile strain or compression to the pipe 10 causes a constant positive or negative offset respectively in the strain profile. The application of torsion similarly causes a constant positive or negative offset in the strain profile. The application of positive or negative hoop strain will cause a corresponding positive or negative offset respectively in the strain profile. It can easily be understood that each of the applied strains, applied to a straight pipe 10, generate a constant offset on the strain measured at the output of the sensor 12.

It can therefore be seen that bending leads to a sinusoidal shape for the variation of strain on the fibre 12, whereas tension, torsion and Hoop lead to a simple offset of the strain values.

Overall, the equations governing strain within the pipe 10 are linear. Therefore, the curvature calculation can be extended to cover more complex deformation of a pipe, combining bending in any direction, tension, torsion and Hoop strain. The strain distribution along the pipe 10 for complex bending is given by:

$$S(s) = \Delta S(s)\sin(K_0 s + \varphi(s)) + S_0(s)$$

where:

$\sin(K_0 s + \varphi(s))$ is the period of the modulation of the strain caused by pipe bending.

Ko is as defined in Equation D.

$\Delta S(s)$ is the amplitude of the modulation and with $\dfrac{1}{R(s)} = \dfrac{1}{\cos\gamma_0}\dfrac{\Delta S(s)}{2r_0}$ .

$S_0(s)$ is an offset generated by the torsion, tension and Hoop strain experienced by the pipe 10.

$\varphi(s)$ is the angle of the bending plane compared to the [X,Z] plane.

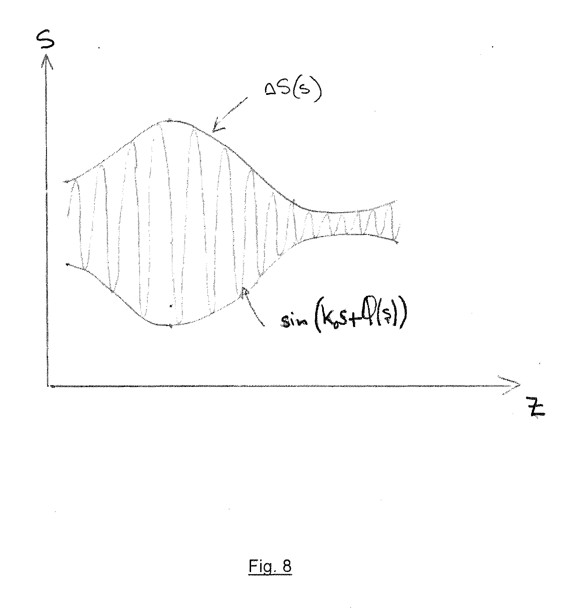

An example illustration of the variation of strain as a function of axial position (z) along the pipe, for complex bending, is shown in Figure 8. It can be seen that it consists of a carrier function $\sin(K_0 s + \varphi(s))$ with an amplitude modulation $\Delta S(s)$. The resulting variation of strain is equivalent to phase and amplitude modulation used in electronic and signal processing. Therefore the techniques developed in the field of electronic signal processing for phase and amplitude demodulation can be applied to the strain variation produced here, to demodulate the strain variation and separate out the constituent components. Where electronic signal processing usually uses time as the main variable, the present invention performs signal demodulation using the curvilinear coordinate s as the main variable.

The variation of $\Delta S(s)$, $\varphi(s)$ and $S_0(s)$ is much slower than the period of the strain variation $\sin(K_0 s + \varphi(s))$. The $\sin(K_0 s + \varphi(s))$ period is essentially fixed by the pipe diameter. In practice, bending, torsion and hoop strain variation take place over a distance which is much greater than the pipe diameter.

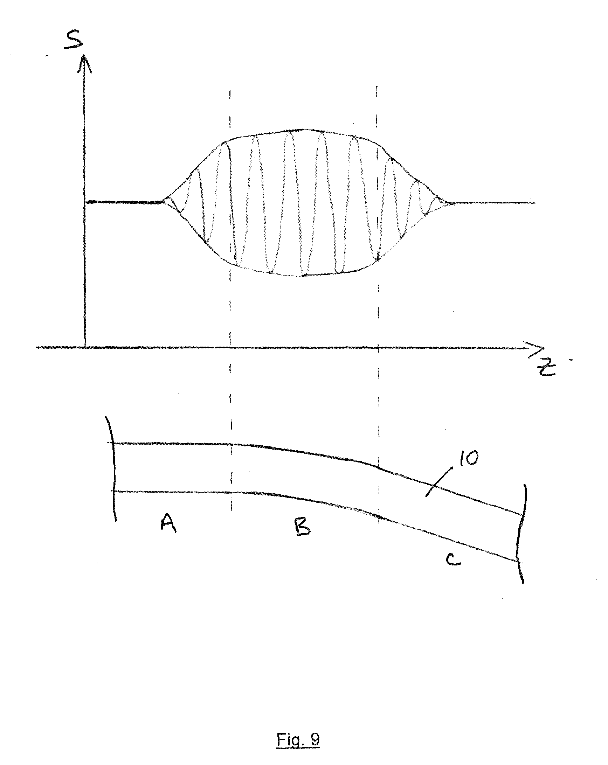

Figure 9 shows an illustration of the variation of strain as a function of axial position where the pipe 10 is exposed to complex bending comprising a first straight section A, a bent section B and a second straight section C. In the straight sections A and C, the fibre 12 experiences a constant strain. In the bent section B, the strain is modulated along the pipe 10 and thus along the fibre 12.

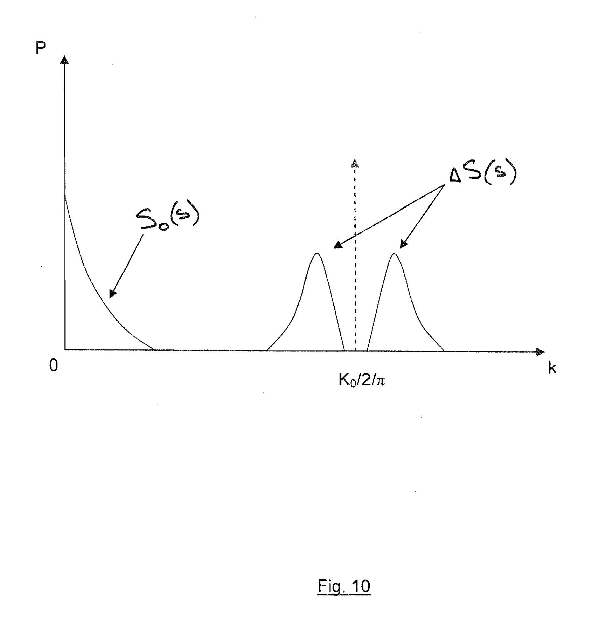

Another method for determining the effects of bending, tension, torsion and Hoop strain is to calculate the Fourier transform of the strain variation, S(s), as illustrated in Figure 10.

In this case, the spatial frequency k is considered. It can be seen that, overall, the generated signal is a bandwidth limited signal. The maximum frequency is in the range of $K_0/2\pi$.

- The signal frequency components include three main contributions:
  - o Contribution 1: The effect of the main modulation $\sin(K_0 s + \varphi(s))$ at $K_0/2/\pi$.
  - o Contribution 2: The effect of the bending contribution $\Delta S(s)$ centred around $K_0/2/\pi$.
  - o Contribution 3: The effect of the torsion, tension and hoop strain, So(s), centred around 0.

Due to the slow variations of $\Delta S(s)$, $\varphi(s)$ and $S_0(s)$ compared to $\sin(K_0 s + \varphi(s))$, the spectral components of the different contributions do not overlap and are clearly distinct.

As above, the effect of the different components can be separated by applying similar signal processing techniques to those used in electronic signal processing applications. The signal processing techniques are adapted by using the curvilinear coordinate s as main variable instead of time, t.

The offset $S_0(s)$ spectral component can be isolated by applying a low-pass filter to the signal. Various low-pass filter signal processing techniques can be applied to isolate $S_0(s..S_0(s)$ includes the contribution of tension, torsion and Hoop strain.

The $\Delta S(s)$, $\varphi(s)$ spectral components can be isolated by applying synchronous demodulation to the signal, using for example $\sin(K_0 s)$ and $\cos(K_0 s)$ as base functions. $\Delta S(s)$ is directly related to the pipe bending radius R(s) as explained above. $\varphi(s)$ is related to the angle of the bending plane.

Low pass signal filtering and synchronous demodulation methods will be well know to the person skilled in the art and will not be described in detail here.

The spatial frequency analysis of the strain generated in the fibre shows that it is essentially a bandwidth limited function. The maximum frequency is around $K_0/2\pi$ . (Equation D) By sampling the strain along the fibre at at least $2k_0$, it is possible, applying the Nyquist-Shanon theorem, to fully construct the distributed strain profile along the fibre 12.

In order for the sampling rate to be high enough in order to allow the fully distributed strain profile to be constructed, the maximum distance between the FBGs in the fibre 12 must be:

$$N_{Grating}\Delta d_{Grating} \le 2\pi\sqrt{r_0^2 + \frac{H^2}{4\pi^2}}$$

where H is the Helix period in the curvilinear coordinate s, $N_{Grating}$ = Number of gratings within one helix period, and $\Delta d_{Grating}$ = Distance between gratings. Applying the Nyquist-Shanon theorem, the maximum grating spacing is given by:

$$\Delta d_{Grating} \le \pi\sqrt{r_0^2 + \frac{H^2}{4\pi^2}}$$

The FBGs may be wavelength or time division multiplex on the optical fibre 12. Interrogation units that can interrogate several hundred gratings provided along a single fibre will be well known to the person skilled in the art. The FBGs are equally spaced along the fibre 12 and provide a local estimation of the strain in the area of each FBG.

Recording the strain measured by each FBG provides a set of strain measurements $[S[n]]_N$, where S[n] = strain at grating n, and N = total number of gratings in the fibre 12. The strain profile along the fibre 12 can then be constructed by interpolating the strain measurements, in this example by applying the Whittaker-Shanon interpolation formula:

$$S(s) = \sum_{n=-\infty}^{+\infty} S[n].sinc(\frac{s-nS_0}{S_0})$$

where So $=1/k_0$

As the number of sampling points with an FBG on the fibre 12 is limited to a couple of hundred, the resulting series may be truncated. However it gives a very good approximation of the actual distributed strain profile along the fibre 12, and thus along the pipe 10.

From the estimation of distributed strain, and thus bending, the pipe shape can be established. The example below shows how to reconstitute the shape of the neutral axis of the pipe 10.

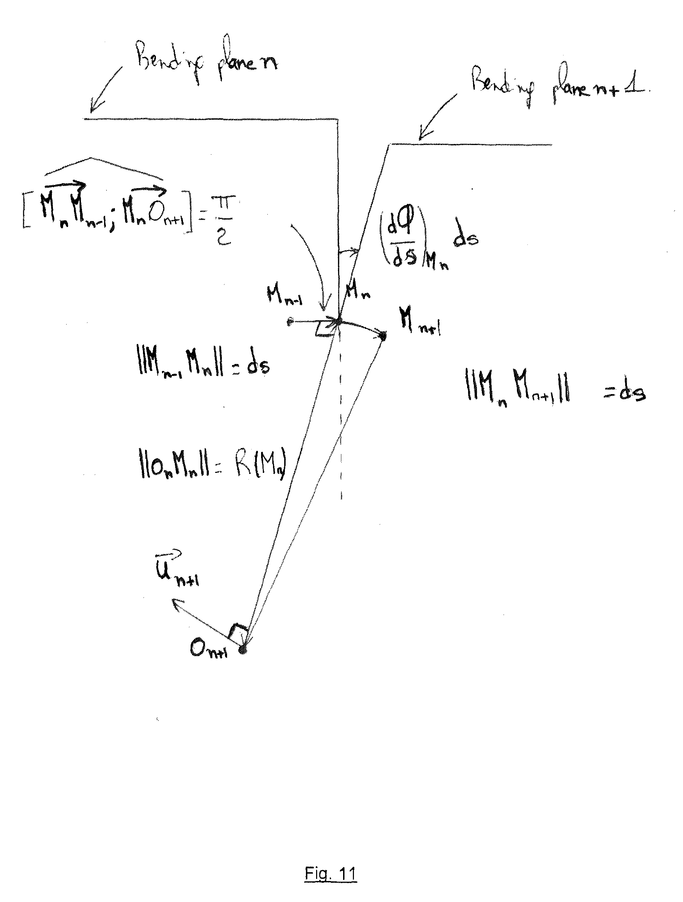

The neutral axis is divided in sub segments ds. The transformation from one point of the curve $M_n$ to the next one $M_{n+1}$ is explained in Figure 11 and by the following steps: Transformation $M_n \to M_{n+1}$:

- Initial condition: Bending plane n, $[P_n]$ Curve tangent $\overrightarrow{M_{n-1}M_n}$ with $\overrightarrow{M_{n-1}M_n} \in [P_n]$

- Bending plane n+1, $[P_{n+1}]$

$$[P_{n+1}] = R_n([P_{n-1}])$$

with $R_n$= rotation: Axis $\overrightarrow{M_{n-1}M_n}$ Angle $\left(\frac{d\varphi}{ds}\right)_{M_n} ds$

- Centre of curvature $O_{n+1}$

$$O_{n+1} \in [P_{n+1}]$$

$$[\overrightarrow{M_nM_{n-1}};\overrightarrow{M_nO_{n+1}}] = \frac{\pi}{2}$$

$$\left\|M_nO_n\right\| = R(M_n)$$

- Calculation of $M_{n+1}$

$$\vec{u}_{n+1} = \text{vector normal to } [P_{n+1}]$$

$$M_{n+1} = L_{n+1}(M_{n+1})$$

where $L_{n+1}$ = rotation with centre $O_{n+1}$ direction $(O_{n+1};U_{n+1})$ angle $\dfrac{ds}{R(M_n)}$

The resulting set of points $[M_n]$ provides a reconstitution of the shape of the neutral axis.

The described embodiments provide a pipe having an optical fibre strain sensor embedded within it to have a fully distributed strain profile measurement made. The embodiments also enable the different strain contributions to be decoupled from one another, such that the bending and shape of the pipe can be determined.

## Claims

1. A pipe having an optical fibre strain sensor coupled to it, the optical fibre strain sensor comprising an optical fibre having a plurality of optical fibre gratings provided therein, the gratings being arranged in a spaced array along the fibre, and the optical fibre strain sensor being helically wound around the axial length of the pipe, such that the gratings are provided in a predetermined orientation relative to the axial direction of the pipe

2. A pipe as claimed in claim 1, wherein the gratings are arranged with a spacing between adjacent gratings such that strain measurements made at each of the gratings may be interpolated to reconstitute the strain profile along the optical fibre and thus along the pipe.

3. A pipe as claimed in claim 1, wherein the gratings are arranged with a spacing between adjacent gratings of

$$\Delta d_{Grating} \leq \pi \sqrt{r_0^2 + \frac{H^2}{4\pi^2}}$$

4. A pipe as claimed in any preceding claim, wherein the optical fibre strain sensor is helically wound with a fixed pitch.

5. A pipe as claimed in claim 4, wherein the helix pitch is selected according to the parameter to which the optical fibre strain sensor is to be most sensitive too.

6. A pipe as claimed in any preceding claim, wherein the pipe comprises a flexible pipe, a rigid pipe or a flowline.

7. A pipe as claimed in any preceding claim, wherein the optical fibre strain sensor is coupled to the pipe by being provided on the surface of the pipe or being embedded within the pipe.

8. A method of determining the shape of a pipe, the method comprising: coupling an optical fibre strain sensor to the pipe, the optical fibre strain sensor comprising an optical fibre having a plurality of optical fibre gratings provided therein, the gratings being arranged in a spaced array along the fibre, and the optical fibre strain sensor being helically wound around the axial length of the pipe, such that the gratings are provided in a predetermined orientation relative to the axial direction of the pipe; optically interrogating the optical fibre gratings to determine their central wavelength and comparing the measured central wavelength of each grating to its known central wavelength for an undeformed pipe, to determine any wavelength shift in the central wavelength of each grating; converting the wavelength shifts into the applied strain experienced by each optical fibre grating;

9. A method of determining the shape of a pipe as claimed in claim 7, wherein the method further comprises determining the shape of the pipe by calculating the strain distribution along the pipe using the equation $S(s)=\Delta S(s)\sin(K_0 s+\varphi(s))+S_0(s)$ where: $\sin(K_0 s+\varphi(s))$ is the modulation of generated by pipe bending; $\Delta S(s)$ is the amplitude of the mod-

ulation $\dfrac{1}{R(s)}=\dfrac{1}{\cos\gamma_0}\dfrac{\Delta S(s)}{2r_0}$ , where $S_0(s)$ is an offset generated by the torsion, tension and Hoop strain);

and $\varphi(s)$ is the angle of the bending plane compared to the x, z plane.

10. A method of determining the shape of a pipe as claimed in claim 8, wherein the method further comprises determining the direction of the main plane of bending of the pipe by comparing the phase of the sinusoidal curve with the phase of a previously recorded sinusoidal curve, a phase shift indicating a change in the main plane of bending, and the phase shift being equal to the angle of rotation of the main plane of bending of the pipe.

11. A method of determining the shape of a pipe as claimed in claims 8 or 9, wherein the method further comprises calculating the Fourier transform of S(s).

12. A method of determining the shape of a pipe as claimed in claim 10, wherein the method further comprises applying a low-pass frequency filter to the Fourier transform to isolate the effect of the torsion, tension and hoop strain $S_0(s)$.

13. A method of determining the shape of a pipe as claimed in claims 10 or 11, wherein the method further comprises applying synchronous demodulation to S(s) to isolate $\Delta S(s)$ and $\varphi(s)$.

14. A method of determining the shape of a pipe as claimed in any of claims 7 to 12, wherein the method further comprises interpolating the strain measurements made at each of the gratings to thereby reconstitute the strain profile along the optical fibre strain sensor and thus along the pipe.

15. A method of determining the shape of a pipe as claimed in claim 13, wherein the method comprises interpolating the strain measurements using the Whittaker-Shanon interpolation formula.

16. A method of determining the shape of a pipe as claimed in any of claims 7 to 14, wherein the method further comprises determining the neutral axis shape of the pipe from the distributed bending profile of the pipe.

17. A method of determining the shape of a pipe as claimed in any of claims 7 to 16, wherein the optical fibre strain sensor is coupled to the pipe by being provided on the surface of the pipe or being embedded within the pipe.

Fig. 1

10

12

(a)

S

$S_0$

Z

10

R

(b)

S

$S_0$

Z

Fig. 2

Fig. 3

$S_{Max} = -S_{min} = S_0$

$S_{Max}$

$R_{min}$

$R$ $R_{max}$ r

$S_{min}$

$2*R_0$

(a)

X

Y Z

H

(b)

Fig. 4

$$\Delta S = S_{Max} - S_{min}$$

$$\frac{1}{R} = \frac{1}{\cos \gamma_0} \frac{\Delta S}{2r_0}$$

$$2\pi \sqrt{r_0^2 + \frac{H^2}{4\pi^2}}$$

Fig. 5

X'   φ   X

Y   Z

(a)

S

S(s)   22   20

K*s

ℓ

(b)

Fig. 6

Fig. 7

$$\Delta S(s)$$

$$\sin\left(k_0 S + \varphi(s)\right)$$

Fig. 8

Fig. 9

Fig. 10

Bending plane $n$

Bending plane $n+1$

$$\left[\overrightarrow{M_n M_{n-1}} \; ; \; \overrightarrow{M_n O_{n+1}}\right] = \frac{\pi}{2}$$

$$\left(\frac{d\varphi}{ds}\right)_{M_n} ds$$

$M_{n-1}$

$M_n$

$M_{n+1}$

$$\|M_{n-1} M_n\| = ds$$

$$\|M_n M_{n+1}\| = ds$$

$$\|O_n M_n\| = R(M_n)$$

$\vec{u}_{n+1}$

$O_{n+1}$

Fig. 11

Europäisches
Patentamt

European
Patent Office

Office européen
des brevets

# EUROPEAN SEARCH REPORT

**Application Number**

EP 08 15 8216

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/233482 A1 (RAMBOW FREDERICK H K [US] RAMBOW FREDERICK HENRY KREISLE [US] ET AL) 19 October 2006 (2006-10-19) | 1-8,14, 16,17 | INV. E21B47/00 |
| A | * paragraphs [0055], [0056]; figure 7 * ----- | 9-13,15 | |
| X | WO 2006/050488 A (SHELL OIL CO [US]; ALLEN DONALD WAYNE [US]; MCMILLAN DAVID WAYNE [US]) 11 May 2006 (2006-05-11) | 1-8,14, 16,17 | |
| A | * claim 4; figure 4 * ----- | 9-13,15 | |
| X | EP 1 635 034 A (INSENSYS LTD [GB]) 15 March 2006 (2006-03-15) * paragraphs [0012], [0020] * ----- | 1,8 | |

**TECHNICAL FIELDS SEARCHED (IPC)**

E21B

The present search report has been drawn up for all claims

| Place of search | Date of completion of the search | Examiner |
|---|---|---|
| Munich | 6 March 2009 | Dauvergne, Bertrand |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 15 8216

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2009

| Patent document cited in search report | | | Publication date | Patent family member(s) | | | Publication date |
|---|---|---|---|---|---|---|---|
| US 2006233482 | A1 | | 19-10-2006 | AT | 411508 | T | 15-10-2008 |
| | | | | AU | 2006236751 | A1 | 26-10-2006 |
| | | | | CA | 2604819 | A1 | 26-10-2006 |
| | | | | CN | 101175970 | A | 07-05-2008 |
| | | | | EP | 1869402 | A1 | 26-12-2007 |
| | | | | JP | 2008537117 | T | 11-09-2008 |
| | | | | WO | 2006113327 | A1 | 26-10-2006 |
| WO 2006050488 | A | | 11-05-2006 | AU | 2005302031 | A1 | 11-05-2006 |
| | | | | BR | PI0517922 | A | 21-10-2008 |
| | | | | GB | 2434863 | A | 08-08-2007 |
| | | | | US | 2006115335 | A1 | 01-06-2006 |
| EP 1635034 | A | | 15-03-2006 | AU | 2005276273 | A1 | 02-03-2006 |
| | | | | WO | 2006021751 | A1 | 02-03-2006 |
| | | | | US | 2006045408 | A1 | 02-03-2006 |

EPO FORM P0459

For more details about this annex : see Official Journal of the European Patent Office, No. 12/82